# EUROPÄISCHE PATENTSCHRIFT

(11) **EP 3 571 905 B1**
(45) Veröffentlichungstag und Bekanntmachung des Hinweises auf die Patenterteilung: **24.11.2021**
(21) Anmeldenummer: 19165413.6
(22) Anmeldetag: 27.03.2019
(51) Int. Cl.: A01B 15/04, A01B 15/06, A01B 23/02

(54) **SCHARSYSTEM UND SCHARSPITZE ZUR VERWENDUNG IN EINEM SCHARSYSTEM ZUR BODENBEARBEITUNG**
COULTER AND TIP FOR USE IN A COULTER SYSTEM FOR SOIL CULTIVATION
SYSTÈME DE SOC ET POINTE DE SOC DESTINÉS À ÊTRE UTILISÉS DANS UN SYSTÈME DE SOC POUR LE TRAITEMENT DU SOL

(30) Priorität: 22.05.2018 DE 102018208024
(43) Veröffentlichungstag der Anmeldung: 27.11.2019
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- EP-A1- 3 235 358
- WO-A1-2015/057078
- DE-A1-102013 102 420
- US-A1- 2016 353 652

## Beschreibung

Die vorliegende Erfindung betrifft eine Scharspitze für ein landwirtschaftliches Bodenbearbeitungsgerät gemäß den Merkmalen des unabhängigen Anspruchs 1 sowie ein Scharsystem, insbesondere für die landwirtschaftliche Bodenbearbeitung gemäß den Merkmalen des unabhängigen Anspruchs 16.

Zur Bodenbearbeitung werden in der Landwirtschaft unterschiedliche Bodenbearbeitungsmaschinen und/oder Bodenbearbeitungsgeräte eingesetzt. Derartige Bodenbearbeitungsmaschinen sind in der Regel mit einem Rahmen ausgestattet, an welchem Rahmen eine Vielzahl an Scharsystemen gelagert sind. Scharsysteme umfassen jeweils einen Scharstiel mit einer daran befestigten lösbaren Scharspitze, welche Scharspitze bei abgesenkter Position des Scharstiels während einer Feldfahrt in den Boden eingreifen und das Erdreich auflockern kann.

Die EP 3 235 358 A1 beschreibt eine Scharspitze zur Verwendung in einem Scharsystem zur Bodenbearbeitung. Die Scharspitze weist einen eine Schneidkante aufweisenden ersten Bereich auf, welche Schneidkante an einem freien Ende in Längserstreckungsrichtung der Scharspitze angeordnet ist. An den ersten Bereich schließt sich in Längserstreckungsrichtung der Scharspitze ein zweiter Bereich an, welcher eine zumindest abschnittsweise bogenförmige Lauffläche ausbildet. An den zweiten Bereich schließt sich in Längserstreckungsrichtung der Scharspitze ein dritter Bereich an, welcher einen Befestigungsbereich ausbildet. Der Befestigungsbereich umfasst Bohrungen, durch welche Bohrungen Befestigungsmittel beispielsweise in Form von Schrauben durchgeführt und eingesetzt werden können, so dass die Scharspitze an einem Scharstiel festgesetzt werden kann. Auf der Vorderseite des Scharstiels kann zusätzlich ein Leitblech vorgesehen sein, welches zumindest abschnittsweise den Befestigungsbereich vorderseitig abdeckt. Auf diese Weise kann das Leitblech dazu beitragen, die Befestigungsmittel auf der Vorderseite der Scharspitze während der Bodenbearbeitung bzw. während der Führung der Scharspitze im Erdreich vor Verschleiß und/oder Beschädigungen zu schützen. Derartige Lösung hat sich jedoch dahingehend als nachteilig erwiesen, da die Befestigungsmittel beim Festsetzen der Scharspitze am Scharstiel rückseitig freiliegend ausgebildet sind. Bei Bodenbearbeitung gleiten diese freiliegenden Enden der Befestigungsmittel jedoch durch das Erdreich, was einen enormen Verschleiß der Befestigungsmittel zur Folge hat.

Die EP 3 248 449 A1 beschreibt einen Federzinken für ein landwirtschaftliches Bodenbearbeitungsgerät mit einem in Fahrtrichtung schräg nach unten und vorne weisendes freies Ende, das als Befestigungsbereich für ein den Boden furchendes Eingriffselement dient. Das Eingriffselement kann beispielsweise als schaufel- oder V-förmige Scharspitze oder dergleichen ausgebildet sein. Die Scharspitze kann korrespondierend zum Befestigungsbereich des Federzinkens ebenfalls einen Befestigungsbereich aufweisen, durch welche Befestigungsbereiche jeweils Befestigungsmittel einsetzbar sind, sodass die Scharspitze am Eingriffselement festgesetzt werden kann. Auch bei dieser Lösung sind die Befestigungsmittel auf der Rückseite der Scharspitze freiliegend ausgebildet, welche beim Gleiten durch das Erdreich besonders verschleißanfällig sind.

Die DE 10 2013 102 420 A1 beschreibt eine Grubberschar zum Anbau an einem Werkzeugträger, insbesondere einen Zinken einer landwirtschaftlichen Bodenbearbeitungsmaschine. Der Zinken weist ein Befestigungsteil auf, welches von Schraubaufnahmen durchsetzt ist. Mittels dieser Schraubaufnahmen kann der Zinken am Rahmen der Bodenbearbeitungsmaschine montiert werden kann. Der Zinken umfasst weiter ein Tragteil, an welchem die Scharspitze, ein Leitelement sowie seitlich zwei Scharflügel angebaut werden. Die Scharspitze und das Leitelement umfassen jeweils Schraubaufnahmen, durch welche Befestigungsmittel durchgeführt werden, um die Scharspitze und das Leitelement am Scharstiel zu befestigen. Das Leitelement umfasst zusätzlich eine Schraubaufnahme, die in Werkzeugvorschubrichtung mittels eines Deckabschnitts der Scharspitze überdeckt ist. Nachteilig jedoch ist, dass auch bei dieser Lösung die Befestigungsmittel zur Befestigung der Scharspitze und des Leitelements am Scharstiel auf der Rückseite des Scharstiels bzw. der Scharspitze freiliegend ausgebildet sind. Somit unterliegen auch diese Befestigungsmittel bei der Bodenbearbeitung bzw. Feldarbeit einem enormen Verschleiß.

Die Dokumente WO 2015/057078 A1 und US 2016/353652 A1 beschreiben bekannte Scharspitzen.

Durch die rückseitig freiliegenden Befestigungsmittel wie beispielsweise Schrauben und/oder Muttern ergeben sich zusammenfassend eine Vielzahl an Nachteilen und Problemen. So können sich beispielsweise die Muttern lockern, welche auf das freiliegende Ende der Befestigungsmittel geschraubt sind. Dadurch können folglich die Befestigungsschrauben und insbesondere auch die Scharspitzen während der Feldarbeit verloren gehen. Des Weiteren können durch den während der Feldarbeit auftretenden Verschleiß der Befestigungsmittel jeweils Gewinde der Befestigungsschrauben beschädigt werden, so dass die Mutter nicht mehr gelöst bzw. geöffnet werden kann. Neben einem Verschleiß der Befestigungsmittel können mitunter auch die jeweiligen Scharstiele verschleißen. Der enorme Verschleiß erfordert mitunter einen regelmäßigen Austausch und eine regelmäßige Kontrolle der Befestigungsmittel und/oder der Scharstiele, was zeit- und kostenintensiv ist.

Der Erfindung liegt daher die Aufgabe zugrunde, eine Scharspitze bzw. ein Scharsystem zur Verfügung zu stellen, bei welcher/welchem die im Stand der Technik genannten Nachteile zumindest weitgehend überwunden werden können, indem die freiliegenden Enden der Befestigungsmittel und/oder das freie Ende des Scharstiels zumindest weitgehend vor Verschleiß geschützt werden. Das Scharsystem soll zugleich einen einfachen Aufbau besitzen.

Diese Aufgaben werden durch eine Scharspitze zur Verwendung in einem Scharsystem zur Bodenbearbeitung mit den Merkmalen im Anspruch 1 sowie durch ein Scharsystem zur Bodenbearbeitung mit den Merkmalen im Anspruch 13 gelöst. Weitere vorteilhafte Ausgestaltungen und Weiterbildungen der Erfindung sind in den jeweils abhängigen Ansprüchen angegeben.

Zur Lösung der genannten Aufgabe schlägt die Erfindung eine Scharspitze zur Verwendung in einem Scharsystem zur Bodenbearbeitung vor. Die erfindungsgemäße Scharspitze weist eine Vorderseite und eine Rückseite auf. Insbesondere kann die Scharspitze einen Grundkörper ausbilden, dessen Vorderseite und dessen Rückseite jeweils flach ausgebildet sind, so dass ein quaderförmiger und flacher Grundkörper mit insbesondere rechteckförmigem Grundriss oder wahlweise auch trapezförmigem Grundriss gebildet ist. Damit ist ein Grundkörper gemeint, der in einer Seitenansicht zumindest abschnittsweise geradlinig bzw. rechteckförmig verläuft, wobei eine Draufsicht vorzugsweise eine rechteckförmige oder trapezförmige Kontur des Grundkörpers zeigt, und wobei die Seitenansicht normalerweise eine über die Längserstreckung dieses Grundkörpers gleichmäßige oder konstante Materialstärke zeigt. Die Scharspitze befindet sich typischerweise an einer Schmalseite des in der Draufsicht rechteckförmig erscheinenden Grundkörpers, wobei die Scharspitze die gesamte Schmalseite umfasst und somit einen scharfkantigen und widerstandsfähigen Eingriffsbereich zur Bodenbearbeitung bietet.

Wahlweise bzw. in einer alternativen Ausgestaltung kann die erfindungsgemäße Scharspitze jedoch auch eine zumindest abschnittsweise konkav ausgebildete Vorderseite und eine zumindest abschnittsweise konvex ausgebildete Rückseite aufweisen. Bei dieser alternativen Variante kann die Scharspitze somit einen Grundkörper ausbilden, dessen Vorderseite konkav und dessen Rückseite konvex ausgebildet ist. Damit ist ein Grundkörper gemeint, der in einer Seitenansicht zumindest abschnittsweise gekrümmt verläuft, wobei eine Draufsicht vorzugsweise eine rechteckförmige oder trapezförmige Kontur des Grundkörpers zeigt, und wobei die Seitenansicht normalerweise eine über die Längserstreckung dieses Grundkörpers gleichmäßige oder konstante Krümmung sowie eine vorzugsweise gleichmäßige oder zur Spitze hin sich leicht reduzierende Materialstärke zeigt. Die Scharspitze befindet sich typischerweise an einer Schmalseite des in der Draufsicht rechteckförmig oder trapezförmig erscheinenden Grundkörpers, wobei die Scharspitze die gesamte Schmalseite umfasst und somit einen scharfkantigen und widerstandsfähigen Eingriffsbereich zur Bodenbearbeitung bietet.

Es sei an dieser Stelle darauf hingewiesen, dass es sich bei der hier beschriebenen erfindungsgemäßen Scharspitze wahlweise auch um einen Teil eines sog. Gänsefußschars handeln kann, bei dem der Grundkörper bauartbedingt pfeil- oder dreieckförmig ausgebildet ist und daher zwei Flügel aufweist, so dass die Scharspitze, wie sie hier beschrieben ist, zwei im Winkel zueinander angeordnete Abschnitte aufweist. Insofern weist ein solches Gänsefußschar streng genommen keinen quaderförmigen oder leicht gekrümmten Grundkörper mit rechteckförmigen Grundriss auf, sondern eine pfeilförmige Gestalt. Dennoch lassen sich die erfindungsgemäßen Merkmale und Grundprinzipien ebenso auf Gänsefußschare übertragen, so dass die erfindungsgemäße Scharspitze auch Teil eines Gänsefußschars sein kann.

Die Scharspitze umfasst oder bietet somit eine Schneidkante, welche vorzugsweise an einem freien Ende der Scharspitze bzw. an einer der Schmalseiten des Grundkörpers der Scharspitze vorgesehen oder angeordnet ist. Im Falle eines Gänsefußschars umfasst die Scharspitze naturgemäß zwei Schneidkanten, die im Winkel zueinander angeordnet sind und an ihrer Spitze aneinander stoßen. Die Schneidkante kann abgerundet und/oder spitz und/oder schräg ausgebildet sein. Der Schneidkante kann weiter ein Schneidelement zugeordnet sein, mittels welchem der Eingriff der Scharspitze in den Boden erleichtert wird. Das Schneidelement kann insbesondere aus einem geeigneten Hartmetall oder dergleichen Material ausgebildet sein. Auch kann die Schneidkante durch das Schneidelement zumindest weitgehend vor Verschleiß geschützt werden. Die Schneidkante kann insbesondere derart ausgebildet sein, dass diese rückseitig einen Freiwinkel in Bezug auf einen zu bearbeitenden Boden umfasst, welcher Freiwinkel vorzugsweise zwischen mindestens 20° und höchstens 70° liegen kann. Danach kann die Schneidkante, insbesondere mit dem bestückten Schneidelement, schräg im Boden geführt werden. Durch den Freiwinkel kann der Kraftaufwand beim Eindringen und/oder beim Führen der Scharspitze in den Boden reduziert werden. Auch kann die Scharspitze effektiver im Boden geführt werden und den Boden, insbesondere das Erdreich, lockern.

Die Scharspitze umfasst weiter einen Befestigungsbereich zur Befestigung der Scharspitze an einem Scharstiel oder an einer anderen geeigneten Verankerung oder einem anderen geeigneten Halter oder Träger. Ein solcher Träger kann bspw. ein Grubberzinken oder dergleichen Bodenbearbeitungsgerät oder -werkzeug sein. Der Befestigungsbereich kann vorzugsweise ausgehend vom freien Ende der Scharspitze mit der Schneidkante am gegenüberliegenden Ende der Scharspitze oder vorzugsweise in etwa mittig der Scharspitze vorgesehen sein, d.h. der Befestigungsbereich kann vorzugsweise entlang der Längserstreckungsrichtung ausgehend von der Schneidkante in etwa im oberen Drittel der Scharspitze vorgesehen sein.

Es ist vorgesehen, dass der Befestigungsbereich wenigstens eine Bohrung umfasst, durch welche wenigstens eine Bohrung zumindest ein Befestigungselement wie beispielsweise eine Befestigungsschraube mit zugehöriger Befestigungsmutter hindurchgeführt und/oder eingesetzt werden kann, sodass die Scharspitze insbesondere an einem Scharstiel oder einem Grubberzinken festgesetzt werden kann, da es sich bei der erfindungsgemäßen Scharspitze insbesondere um eine Grubberspitze o. dgl. handeln kann, nicht jedoch etwa um einen Bearbeitungs- oder Eingriffsabschnitt einer Pflugschar oder ähnlichem Werkzeug. Wie oben erwähnt, sollen auch Gänsefußschare unter den hier verwendeten Begriff der Scharspitze fallen.

An dieser Stelle sei darauf hingewiesen, dass der Scharstiel korrespondierend zur flachen, weitgehend ebenen oder auch konvexen Rückseite der Scharspitze ausgebildet sein kann und entsprechend ebenfalls flach sein oder ggf. eine gleiche Krümmung und/oder Biegung aufweisen kann, so dass eine flächige Anlage des Grundkörpers an der korrespondierenden Gegenfläche des Trägers, des Scharstiels oder Grubberzinkens gegeben ist. Korrespondierend zu der wenigstens einen Bohrung des Befestigungsbereichs der Scharspitze kann der Scharstiel ebenfalls einen Befestigungsbereich mit wenigstens einer Bohrung umfassen, welche Bohrungen bei Montage vorzugsweise fluchtend aufeinander liegen, so dass zumindest ein Befestigungsmittel durch die wenigstens eine Bohrung der Scharspitze und durch die wenigstens eine Bohrung des Scharstiels eingesetzt werden kann. Sinnvollerweise sind jedoch zwei solcher Befestigungsbohrungen vorhanden, die in einem ausreichenden Abstand voneinander angeordnet sind, so dass eine zuverlässige und verdrehsichere Befestigung der Scharspitze an einer korrespondierenden Gegenfläche ermöglicht ist.

Das zumindest eine Befestigungsmittel kann beispielsweise in Form von einer Schraube oder dergleichen ausgebildet sein. Das zumindest eine Befestigungsmittel, insbesondere die Schraube, kann dabei derart durch die wenigstens eine Bohrung und durch die wenigstens eine korrespondierende Bohrung am Scharstiel geführt und/oder eingesetzt werden, so dass dieses ein freiliegendes Ende umfasst bzw. dass das Ende des zumindest einen Befestigungsmittels freiliegend ausgebildet ist. Um die Scharspitze zusätzlich insbesondere am Scharstiel zu sichern bzw. festzusetzen, kann zumindest eine Mutter auf das freiliegende Ende des Befestigungsmittels, insbesondere der Schraube, montiert werden.

Z Wahlweise umfasst der Befestigungsbereich anstelle der wenigstens einen Bohrung J Z wenigstens einen Z Zapfen, Z über welchen Zapfen die Scharspitze am Scharstiel festgesetzt werden kann. Insbesondere kann beispielsweise der wenigstens eine Zapfen in eine korrespondierende Bohrung und/oder Aufnahme oder dergleichen im Befestigungsbereich des Scharstiels durchgeführt und/oder verrastet werden. Der wenigstens eine Zapfen kann dabei derart ausgebildet sein, dass dieser bei festgesetzter Scharspitze am Scharstiel ein freiliegendes Ende umfasst bzw. dass bei festgesetzter Scharspitze am Scharstiel das freie Ende des wenigstens einen Zapfens freiliegend ausgebildet ist. Um die Scharspitze zusätzlich insbesondere am Scharstiel zu sichern bzw. festzusetzen, kann zumindest eine Mutter oder dergleichen auf das freiliegende Ende des Befestigungsmittels, insbesondere auf den wenigstens einen Zapfen, montiert werden. Wahlweise kann der Zapfen mit einem Außengewinde versehen sein, so dass durch Aufschrauben einer Befestigungsmutter eine Verankerung der Scharspitze ermöglicht ist.

Erfindungsgemäß ist auf der Rückseite der Scharspitze oberhalb der Schneidkante zumindest ein aus der Rückseite der Scharspitze herausragendes Abschirmelement vorgesehen oder angeordnet.

Grundsätzlich ist es auch möglich, dass das wenigstens eine aus der flachen oder konvex gekrümmten Rückseite der Scharspitze herausragende Abschirmelement auf der Rückseite der Scharspitze zwischen der Schneidkante und dem Befestigungsbereich und in Längserstreckungsrichtung der Scharspitze, ausgehend von der Schneidkante zumindest näherungsweise vor dem Befestigungsbereich und/oder nahe am Befestigungsbereich angeordnet ist.

Das zumindest eine Abschirmelement kann dazu beitragen, dass das rückseitig freiliegende Ende des zumindest einen Befestigungsmittels und/oder die zumindest eine Mutter als auch das freie Ende des Scharstiels vor Verschleiß und/oder Beschädigungen während des Gleitens der Scharspitze im Boden geschützt werden können. Dies zeigt sich insbesondere darin, da die bei im Boden geführter Scharspitze typischerweise auftretenden Verschleißeffekte und/oder -erscheinungen und teilweise erheblichen abrasiven Effekte oder abrasiven Auswirkungen nun nicht mehr unmittelbar auf das freiliegende Ende des zumindest einen Befestigungsmittels und/oder auf die zumindest eine Mutter und/oder auf das freie Ende des Scharstiels wirken, sondern vom zumindest einem Abschirmelement weitgehend abgeschirmt und damit kompensiert und/oder abgefangen werden können. Insbesondere kann auch vorgesehen sein, dass das zumindest eine Abschirmelement beim Gleiten der Scharspitze im Boden eine Öffnung im Ackerboden erzeugt, so dass das freiliegende Ende des Befestigungsmittels und/oder die zumindest eine Mutter nicht mehr entlang des Erdreichs gleiten, wodurch der Verschleiß am freiliegenden Ende des Befestigungsmittels und/oder an der zumindest einen Mutter reduziert werden kann.

Es ist vorgesehen, dass das wenigstens eine Abschirmelement in Längserstreckungsrichtung der Scharspitze ausgehend von der Schneidkante unmittelbar unterhalb der wenigstens einen Bohrung des Befestigungsbereiches und/oder unmittelbar benachbart zum Zapfen des Befestigungsbereiches vorgesehen ist.

Grundsätzlich wäre es auch denkbar, die Rückseite der Scharspitze mit zumindest zwei oder mehreren Abschirmelementen zu versehen. Beispielsweise kann die Anzahl an Abschirmelementen gleich der Anzahl an Bohrungen im Befestigungsbereich sein, wobei die Abschirmelemente jeweils in Längserstreckungsrichtung der Scharspitze ausgehend von der Schneidkante unterhalb der jeweiligen Bohrung angeordnet sein können.

Weiter kann vorgesehen sein, dass das zumindest eine Abschirmelement den Befestigungsbereich, insbesondere das freiliegende Ende des zumindest einen Befestigungsmittels und/oder die zumindest eine Mutter, zumindest abschnittsweise überragt und/oder überdeckt.

Wahlweise kann das zumindest eine Abschirmelement den Befestigungsbereich, insbesondere das freiliegende Ende des zumindest einen Befestigungsmittels und/oder die zumindest eine Mutter, vollständig überragen und/oder überdecken. Bei dieser Ausführungsform kann das zumindest ein Abschirmelement beispielsweise wenigstens eine Aussparung umfassen, in welche Auspaarung das freiliegende Ende des zumindest einen Befestigungsmittels und/oder die zumindest eine Mutter aufgenommen werden kann/können, d.h. das freiliegende Ende des zumindest einen Befestigungsmittels und/oder die zumindest eine Mutter können vollständig durch das zumindest eine Abschirmelement geschützt werden, da diese nicht mehr unmittelbar den Kräften während des Eindringens und/oder des Gleitens der Scharspitze im Boden ausgesetzt sind.

Weiter kann vorgesehen sein, dass das zumindest eine Abschirmelement eine Breite umfasst, welche zumindest näherungsweise der Breite der Scharspitze oder der Breite des Scharstiels oder vorzugsweise zumindest der Breite des zumindest einen Befestigungsmittels und/oder der zumindest einen Mutter entspricht. Das zumindest eine Abschirmelement ist vorzugsweise derart ausgebildet, dass dieses die Bodenbearbeitung nicht beeinträchtigt und die erforderliche Zugkraft für die Scharspitze nicht erhöht.

Außerdem kann bei einer Variante der erfindungsgemäßen Scharspitze vorgesehen sein, dass das zumindest eine Abschirmelement eine Höhe oder Erhöhung gegenüber der Rückseite aufweist, welche annähernd der Stärke eines über die Rückseite der Scharspitze hinausragenden Abschnittes oder Kopfes des wenigstens einen Befestigungsmittels entspricht. Ggf. kann das Abschirmelement auch etwas höher ausgebildet sein als der wenigstens eine über die Rückseite der Scharspitze hinausragenden Abschnittes oder Kopfes des wenigstens einen Befestigungsmittels. Auf diese Weise lässt sich zuverlässig verhindern, dass die entlang des Abschirmelements sowie des Befestigungsmittels streichende Erde während eines Bodenbearbeitungsvorganges zu einem allmählichen abrasiven Abtrag des Schraubenkopfes oder sonstigen Befestigungsmittels führt, womit eine hohe Standzeit und hohe Verschleißresistenz der lösbaren Befestigungselemente der Scharspitze sichergestellt werden kann.

Weiter kann vorgesehen sein, dass das zumindest eine Abschirmelement in Längserstreckungsrichtung der Scharspitze ausgehend von der Schneidkante in Richtung zum Befestigungsbereich konisch aufweitend ausgebildet ist. Durch die konisch aufweitende Form des zumindest einen Abschirmelements kann ein optimaler Erdfluss gewährleistet werden, da das Erdreich über das Abschirmelement ohne Klumpenbildung und/oder ohne aufgestaut zu werden gleiten kann. Auch kann durch die konisch aufweitende Form des zumindest einen Abschirmelements der Widerstand während des Eindringens und/oder des Gleitens der Scharspitze im Boden verringert werden.

Weiter kann vorgesehen sein, dass ein Winkel der konischen Aufweitung zumindest näherungsweise gleich sein kann zu dem Freiwinkel, welcher an der Schneidkante ausgebildet ist.

Wahlweise kann das zumindest eine Abschirmelement in Längserstreckungsrichtung der Scharspitze ausgehend von der Schneidkante in Richtung zum Befestigungsbereich eine V-förmige oder eine U-förmige Kontur umfassen. Auf diese Weise können das freiliegende Ende des zumindest einen Befestigungsmittels und/oder die zumindest eine Mutter zumindest abschnittsweise auch an den Seitenflächen überdeckt werden, wodurch die Verschleißerscheinungen am freiliegenden Ende des zumindest einen Befestigungsmittels und/oder an der zumindest einen Mutter noch weiter minimiert werden können.

Weiter kann vorgesehen sein, dass das zumindest eine Abschirmelement aus einem Vollmaterial gebildet ist. Darunter kann insbesondere auch eine Ausführungsvariante der Scharspitze fallen, bei der das zumindest eine Abschirmelement einstückig bzw. untrennbar und in einem gemeinsamen Fertigungsschritt mit der Scharspitze ausgebildet ist. Als Grundkörper der erfindungsgemäßen Scharspitze eignen sich insbesondere im Schmiedeverfahren hergestellte Metallstücke, bei denen sich eine Fertigung des gesamten Bauteils mitsamt dem angeordnetem Abschirmelement jeweils aus einem Stück herstellen lässt. Ein wichtiger Grund für die bevorzugte Verwendung von diesem Fertigungsverfahren besteht darin, dass sich die insbesondere aus Hartmetall oder einem Hartstoff gefertigten Schneiden besser an Schmiedeteile anlöten lassen, während bei Gussbauteilen eine haltbare und belastbare Lötverbindung schwieriger herstellbar ist.

Um Verschleißerscheinungen am zumindest einen Abschirmelement zusätzlich zu reduzieren und/oder zu verringern, kann vorgesehen sein, dass das zumindest eine Abschirmelement mit zumindest einem Hartmetallelement oder einem Hartstoffelement o. dgl. bestückt ist und/oder zumindest einen abriebfesten Auftrag umfasst. Bei dem zumindest einen abriebfesten Auftrag kann es sich beispielsweise um Zink-Nickel, chemisch Nickel, Chrom bzw. Chromschichtsysteme, Hartsilber, Kombinationsschichten oder anodische Schichten wie beispielsweise Eloxalschichten, oder dergleichen handeln. Wie oben bereits im Zusammenhang mit der optionalen angelöteten Spitze oder Schneidkante erwähnt, kann dieses optionale Hartmetallelement oder Hartstoffelement insbesondere am Abschirmelement angelötet sein.

Gemäß einer alternativen Ausführungsvariante kann auch vorgesehen sein, dass die Scharspitze mit dem zumindest einen Abschirmelement mehrteilig ausgebildet ist. Bei einer solchen mehrteiligen Ausführungsform kann sowohl die Scharspitze als auch das Abschirmelement jeweils als Schmiede- oder Gussteil ausgebildet sein, so dass das zumindest eine Abschirmelement an der Scharspitze angelötet oder auf sonstige Weise angefügt und befestigt werden kann. Bei einer mehrteiligen Ausführungsform kann es sich bei der Scharspitze und bei dem zumindest einen Abschirmelement um zumindest zwei separate Komponenten handeln. Vorzugsweise kann das zumindest eine Abschirmelement unter Vermittlung einer stoffschlüssigen Verbindung auf der Rückseite der Scharspitze angebracht und/oder befestigt werden. Bei der stoffschlüssigen Verbindung kann es sich beispielsweise um eine Schweiß-, Kleb- und/oder Lötverbindung handeln.

Weiter kann vorgesehen sein, dass die Scharspitze als solche einen einteiligen bzw. einstückig ausgebildeten Grundkörper umfasst, womit insbesondere eine Herstellung als einstückiges Guss- oder Schmiedeteil gemeint sein kann. Auf der Vorderseite der Scharspitze, insbesondere auf der Vorderseite des Grundkörpers kann/können zumindest ein Hartmetallelement oder mehrere Hartmetallelemente vorgesehen sein, welche den Verschleiß an der Scharspitze reduzieren.

Wahlweise oder zusätzlich kann auf der Vorderseite der Scharspitze, insbesondere auf der Vorderseite des Grundkörpers der Scharspitze zumindest ein abriebfester Auftrag vorgesehen sein, wodurch ebenfalls Verschleißerscheinungen an der Scharspitze reduziert werden können. Bei dem zumindest einen abriebfesten Auftrag kann es sich beispielsweise um Zink-Nickel, chemisch Nickel, Chrom bzw. Chromschichtsysteme, Hartsilber, Kombinationsschichten oder anodische Schichten wie beispielsweise Eloxal, oder dergleichen handeln.

Das zumindest eine Hartmetallelement oder die mehreren Hartmetallelemente und/oder der zumindest eine abriebfeste Auftrag auf der Vorderseite der Scharspitze kann/können dazu dienen, den Befestigungsbereich vorderseitig abzudecken sowie vor Verschleiß und/oder vor Beschädigungen zu schützen.

Die Erfindung betrifft weiter ein Scharsystem zur insbesondere landwirtschaftlichen Bodenbearbeitung, das wenigstens einen Scharstiel und eine lösbar am Scharstiel montierte Scharspitze umfasst. Die Scharspitze umfasst einen Grundkörper mit einer Vorderseite und einer Rückseite. Wie oben schon erwähnt, können Vorder- und Rückseite jeweils flach ausgebildet oder ggf. auch gekrümmt sein, wobei in diesem Fall die Vorderseite typischerweise konkav und die Rückseite konvex gekrümmt sein können.

Die Scharspitze umfasst weiter eine Schneidkante, welche vorzugsweise an einem freien Ende der Scharspitze vorgesehen ist. Die Schneidkante kann abgerundet und/oder spitz und/oder schräg ausgebildet sein. Der Schneidkante kann weiter ein Schneidelement zugeordnet sein, mittels welchem der Eingriff der Scharspitze in den Boden erleichtert wird. Das Schneidelement kann aus Hartmetall oder dergleichen ausgebildet sein. Auch kann die Schneidkante durch das Schneidelement zumindest weitgehend vor Verschleiß geschützt werden. Die Schneidkante kann insbesondere derart ausgebildet sein, dass diese rückseitig einen Freiwinkel in Bezug auf einen zu bearbeitenden Boden umfasst, welcher Freiwinkel vorzugsweise zwischen mindestens 20° und höchstens 70° liegen kann.

Wie oben erwähnt, sollen auch Gänsefußschare unter den hier verwendeten Begriff der Scharspitze fallen, so dass die bereits oben beschriebenen Besonderheiten auch hierfür gelten sollen. Das erfindungsgemäß vorgesehene Abschirmelement kann bei Gänsefußscharen ebenso sinnvoll zur Anwendung kommen wie bei anderen Typen von Scharspitzen, etwa bei einfachen Zinkenscharen etc.

Die Scharspitze umfasst weiter einen Befestigungsbereich, insbesondere zur Befestigung der Scharspitze am Scharstiel. Der Befestigungsbereich kann vorzugsweise ausgehend von der Schneidkante am gegenüberliegenden Ende der Scharspitze oder vorzugsweise in etwa mittig der Scharspitze vorgesehen sein, d.h. der Befestigungsbereich kann vorzugsweise entlang der Längserstreckungsrichtung ausgehend von der Schneidkante in etwa im oberen Drittel der Scharspitze vorgesehen sein.

Es kann vorgesehen sein, dass der Befestigungsbereich wenigstens eine Bohrung umfasst, durch welche wenigstens eine Bohrung zumindest ein Befestigungselement durchgeführt und/oder eingesetzt werden kann, sodass die Scharspitze insbesondere am Scharstiel festgesetzt werden kann. An dieser Stelle sei darauf hingewiesen, dass der Scharstiel korrespondierend zur flachen oder abschnittsweise oder vollständig konvexen Rückseite der Scharspitze ausgebildet sein kann und entsprechend eine gleiche Kontur oder Krümmung und/oder Biegung aufweisen kann. Korrespondierend zu der wenigstens einen Bohrung des Befestigungsbereichs der Scharspitze kann der Scharstiel ebenfalls einen Befestigungsbereich mit wenigstens einer Bohrung umfassen, welche Bohrungen bei Montage vorzugsweise fluchtend aufeinander liegen, so dass Befestigungsmittel durch die wenigstens eine Bohrung der Scharspitze und durch die wenigstens eine Bohrung des Scharstiels eingesetzt werden kann.

Das zumindest eine Befestigungselement kann beispielsweise in Form von einer Schraube oder dergleichen ausgebildet sein. Das zumindest eine Befestigungselement, insbesondere die Schraube, kann dabei derart durch die wenigstens eine Bohrung und durch die wenigstens eine korrespondierende Bohrung am Scharstiel geführt und/oder eingesetzt werden, so dass dieses ein freiliegendes Ende umfasst bzw. dass das Ende des zumindest einen Befestigungselements freiliegend ausgebildet ist. Um die Scharspitze zusätzlich insbesondere am Scharstiel zu sichern bzw. festzusetzen kann auf das freiliegende Ende des Befestigungselements, insbesondere auf die Schraube, zumindest eine Mutter montiert werden.

Erfindungsgemäß ist auf der Rückseite der Scharspitze oberhalb der Schneidkante zumindest ein herausragendes Abschirmelement vorgesehen.

Wahlweise kann auch vorgesehen sein, dass das aus der Rückseite der Scharspitze herausragende Abschirmelement auf der Rückseite der Scharspitze zwischen der Schneidkante und dem Befestigungsbereich, insbesondere in Längserstreckungsrichtung der Scharspitze ausgehend von der Schneidkante zumindest näherungsweise vor dem Befestigungsbereich und/oder nahe am Befestigungsbereich angeordnet ist.

Wahlweise kann vorgesehen sein, dass das wenigstens eine Abschirmelement unmittelbar am Befestigungsbereich vorgesehen bzw. positioniert ist.

Weiter kann vorgesehen sein, dass das zumindest eine Abschirmelement den Befestigungsbereich, insbesondere das freiliegende Ende des zumindest einen Befestigungsmittels und/oder die zumindest eine Mutter, zumindest abschnittsweise überragt und/oder überdeckt.

Wahlweise kann das zumindest eine Abschirmelement den Befestigungsbereich, insbesondere das freiliegende Ende des zumindest einen Befestigungsmittels und/oder die zumindest eine Mutter, vollständig überragen und/oder überdecken. Bei dieser Ausführungsform kann das zumindest ein Abschirmelement wenigstens eine Aussparung umfasst, in welche Auspaarung das freiliegende Ende des zumindest einen Befestigungsmittels und/oder die Mutter aufgenommen werden kann/können.

Hinsichtlich aller oben erwähnten Aspekte und Ausführungsvarianten der erfindungsgemäßen Scharspitze zur Verwendung in einem Scharsystem zur landwirtschaftlichen Bodenbearbeitung, sei an dieser Stelle darauf hingewiesen, dass diese Aspekte und Charakteristika gleichermaßen Teil des erfindungsgemäßen Scharsystems sind oder Anwendung auf diese finden können. Wenn daher an irgend einer Stelle der obigen Beschreibung von bestimmten Aspekten und Varianten der Scharspitze und/oder des Scharsystems die Rede ist, so sind diese Aspekte und Ausführungsvarianten gleichermaßen auf die Scharspitze sowie auf das Scharsystem zu lesen und sollen auch in dieser Weise verstanden werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A und 1B zeigen in einer Perspektivansicht eine Ausführungsform einer Scharspitze.
Die Fig. 1C zeigt eine Draufsicht der in den Figuren 1A und 1B dargestellten Scharspitze.
Die Fig. 1D zeigt eine Rückansicht der in den Figuren 1A bis 1C dargestellten Scharspitze.
Die Fig. 2A zeigt in einer Perspektivansicht eine Ausführungsform eines Scharsystems.
Die Fig. 2B zeigt in einer Seitenansicht das in Fig. 2A dargestellte Scharsystem.
Die Fig. 3 zeigt in einer Detailansicht die in den Figuren 2A und 2B montierte Scharspitze am Scharstiel.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Scharspitze und das erfindungsgemäße Scharsystem ausgestaltet sein können und stellen keine abschließende Begrenzung dar.

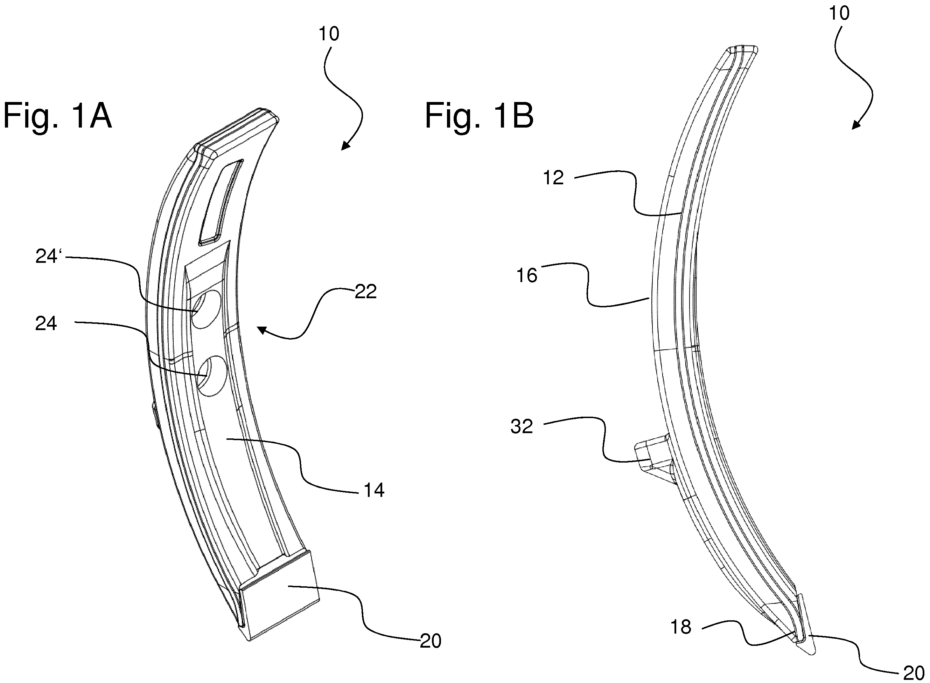

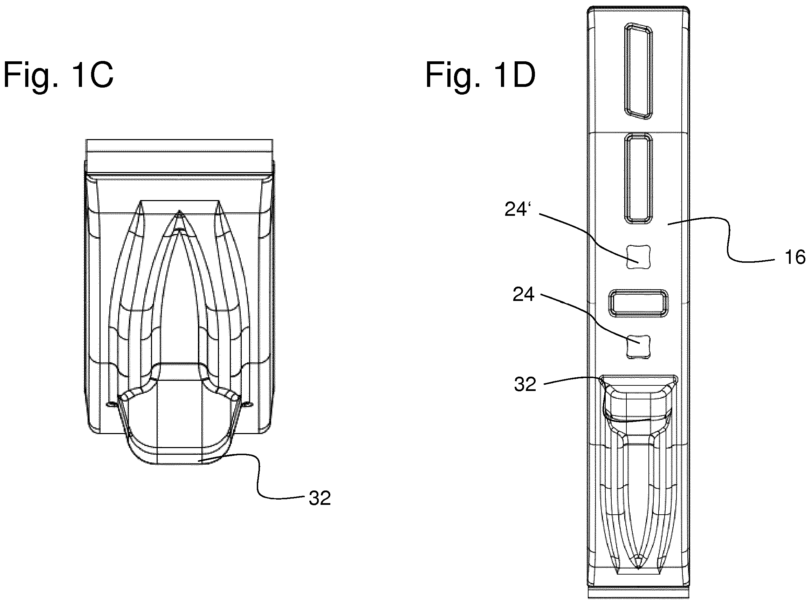

Die Figuren 1A bis 1D zeigen in verschiedenen Ansichten eine Ausführungsform einer Scharspitze 10. Die Scharspitze 10 umfasst einen Grundkörper 12, dessen Vorderseite 14 konkav und dessen Rückseite 16 konvex ausgebildet ist. Bei dem Grundkörper 12 der Scharspitze 10 handelt es sich um ein einteiliges Bauteil.

Die in den Figuren 1A bis 3 gezeigte Ausführungsvariante mit der gekrümmten Gestaltung der Scharspitze 10 ist jedoch keinesfalls einschränkend zu verstehen. So kann die Scharspitze 10 wahlweise auch flach ausgebildet sein und jeweils eine ebene Vorderseite 14 und eine ebene Rückseite 16 aufweisen, so dass ein regelmäßig quaderförmiger Grundkörper 12 gebildet ist.

An einem freien Ende der Scharspitze 10 ist eine Schneidkante 18 vorgesehen, welche abgerundet ausgebildet ist. Die Schneidkante 18 ist insbesondere derart ausgebildet, dass diese rückseitig einen Freiwinkel in Bezug auf einen hier nicht dargestellten zu bearbeitenden Boden umfasst, welcher Freiwinkel vorzugsweise zwischen mindestens 20° und höchstens 70° liegen kann.

Um das Eindringen der Scharspitze 10 in den Boden bzw. in das Erdreich zu erleichtern, ist der Schneidkante 18 ein Schneidelement 20 zugeordnet, welches als Hartmetallelement ausgebildet ist. Das Schneidelement 20 ist L-förmig ausgebildet, so dass es zumindest abschnittsweise auf der Vorderseite 14 und zumindest abschnittsweise auf der Rückseite 16 der Scharspitze 10, insbesondere auf der Schneidkante 18, vorgesehen ist. Das Schneidelement 20 ist unter Vermittlung einer stoffschlüssigen Verbindung, beispielsweise in Form von Schweißen, Kleben und/oder Löten, auf der Schneidkante 18 befestigt.

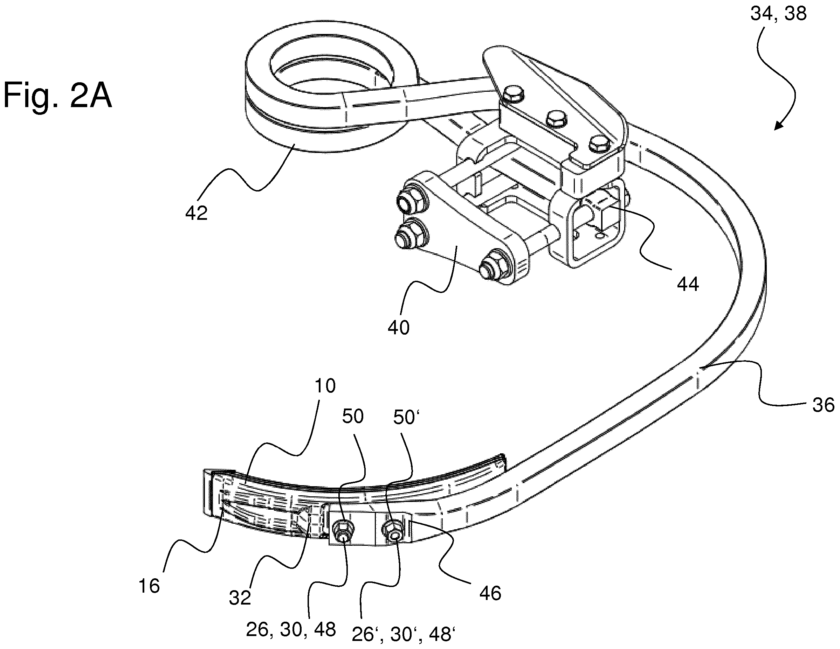

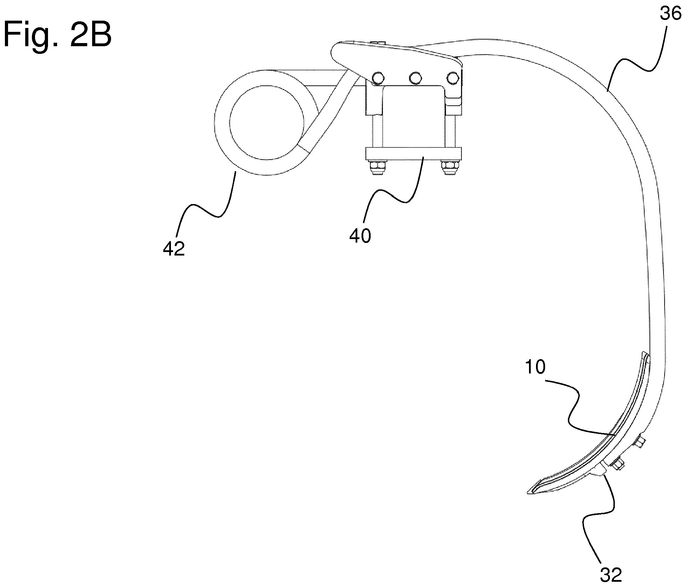

Die Scharspitze 10 umfasst weiter einen Befestigungsbereich 22, insbesondere zur Befestigung der Scharspitze 10 an einem Scharstiel 36 (vgl. Figuren 2A und 2B). Der Befestigungsbereich 22 befindet sich in etwa mittig bzw. im oberen Drittel der Scharspitze 10 ausgehend von dessen Längserstreckungsrichtung.

Der Befestigungsbereich 22 umfasst zwei Bohrungen 24, 24', welche jeweils mit hier nicht dargestellten Gewinden ausgestattet sind. In die zwei Bohrungen 24, 24' werden Befestigungsmittel 26, 26', beispielsweise in Form von Schrauben 30, 30' eingesetzt, so dass die Scharspitze 10 an dem Scharstiel 36 (vgl. Figuren 2A und 2B) festgesetzt wird.

Auf der Rückseite 16 der Scharspitze 10 ist zwischen der Schneidkante 18 und dem Befestigungsbereich 22, insbesondere in Längserstreckungsrichtung der Scharspitze 10 ausgehend von der Schneidkante 18 zumindest näherungsweise vor dem Befestigungsbereich 22 und/oder nahe am Befestigungsbereich 22 ein aus der Rückseite 16 herausragendes Abschirmelement 32 vorgesehen. Insbesondere ist das Abschirmelement 32 dabei derart an der Scharspitze 10 angeordnet, dass dieses in Längserstreckungsrichtung der Scharspitze 10 ausgehend von der Schneidkante 18 unmittelbar unterhalb der Bohrung 24 liegt.

Gemäß den Figuren 1A bis 1C ist das Abschirmelement 32 in Längserstreckungsrichtung der Scharspitze 10 ausgehend von der Schneidkante 18 in Richtung zum Befestigungsbereich 22, insbesondere in Richtung zur Bohrung 24, konisch aufweitend ausgebildet, d.h. die Breite des Abschirmelements 32 nimmt in Längserstreckungsrichtung der Scharspitze 10 ausgehend von der Schneidkante 18 in Richtung zum Befestigungsbereich 22 zu. Die konische Ausbildung des Abschirmelements 32 bewirkt, dass ein optimaler Erdfluss gewährleistet wird, da das Erdreich über das Abschirmelement 32 ohne Klumpenbildung und/oder ohne aufgestaut zu werden gleiten kann.

Vorzugsweise ist ein Winkel der konischen Aufweitung des Absperrelements 32 zumindest näherungsweise gleich zum Freiwinkel, welcher an der Schneidkante 18 der Scharspitze 10 ausgebildet ist.

Die maximale Breite des Abschirmelements 32 entspricht dabei zumindest näherungsweise der Breite der Rückseite 16 der Scharspitze 10. Die maximale Breite des Abschirmelements 32 ist jeweils so gewählt, dass das Abschirmelement 32 zumindest breiter als die Bohrungen 24, 24' ist. Jedoch ist das Abschirmelement 32 derart ausgebildet, dass dieses die Bodenbearbeitung nicht beeinträchtigt und die erforderliche Zugkraft für die Scharspitze 10 nicht erhöht.

Bei der Scharspitze 10 mit dem Abschirmelement 32 handelt es sich um ein Schmiedeteil, so dass ein einteiliges Bauteil ausgebildet ist. Das Abschirmelement 32 ist folglich auf der Rückseite 16 der Scharspitze 10 integriert und bildet kein separates Bauteil aus.

In den Figuren 2A und 2B ist in verschiedenen Ansichten ein Scharsystem 34 bzw. ein Federzinken 38 dargestellt, bei welchem die Scharspitze 10 an einem Scharstiel 36 festgesetzt ist. Der Federzinken 38 umfasst einen Scharstiel 36. An einem Ende des Scharstiels 36 ist eine Befestigungseinheit 40 vorgesehen, mittels welcher der Scharstiel 36 an einem hier nicht dargestellten Rahmen einer landwirtschaftlichen Bodenbearbeitungsmaschine gelagert und/oder vorgespannt werden kann. Dieser Bereich des Scharstiels 36 wird auch als Einspannabschnitt 44 bezeichnet. Nach dem Einspannabschnitt 44 folgen in Längserstreckungsrichtung des Scharstiels 36 Federwindungen 42.

In Richtung zum weiteren freien Ende des Scharstiels 36 ist dieser zumindest abschnittsweise gebogen ausgebildet, dessen Biegung vorzugsweise korrespondierend zur Form und/oder Krümmung der Scharspitze 10 ausgebildet ist. Am freien Ende des Scharstiels 36 ist eine Scharspitze 10 lösbar montiert, welche Scharspitze 10 einen Aufbau gemäß der in den Figuren 1A bis 1E gezeigten Scharspitze 10 umfasst.

Dementsprechend umfasst die Scharspitze 10 einen einteilig ausgebildeten Grundkörper 12 mit einer konkav ausgebildeten Vorderseite 14 und einer konvex ausgebildeten Rückseite 16. An einem freien Ende der Scharspitze 10 ist eine abgerundete Schneidkante 18 vorgesehen, welche rückseitig einen Freiwinkel in Bezug auf einen zu bearbeitenden Boden umfasst. Der Freiwinkel liegt vorzugsweise zwischen mindestens 4° und 10°, so dass die Scharspitze 10 schräg im Boden geführt werden kann. Zudem kann die Schneidkante 18 mit einem L-förmig ausgebildeten Schneidelement 20 bestückt sein, welches beispielsweise aus einem Hartmetall oder dergleichen ausgebildet ist.

Die Scharspitze 10 umfasst einen Befestigungsbereich 22 zur Befestigung der Scharspitze 10 am Scharstiel 36. Der Befestigungsbereich 22 befindet sich ausgehend von der Schneidkante 18 am gegenüberliegenden Ende der Scharspitze 10 bzw. mittig und umfasst zwei Bohrungen 24, 24'. Korrespondierend zum Befestigungsbereich 22 der Scharspitze 10 umfasst der Scharstiel 36 ebenfalls an seinem freien Ende 28 einen Befestigungsbereich 46, welcher zwei hier nicht dargestellte Bohrungen umfasst. Bei Montage der Scharspitze 10 am Scharstiel 36 sind die Bohrungen 24, 24' der Scharspitze 10 sowie die Bohrungen des Scharstiels 36 jeweils so auszurichten, dass diese fluchtend zueinander liegen. Durch die fluchtend zueinander liegenden Bohrungen 24, 24' ist jeweils ein Befestigungsmittel 26, 26' in Form von Schrauben 30, 30' einsetzbar, so dass die Scharspitze 10 am Scharsiel 36 festgesetzt wird. Die Schrauben 30, 30' sind dabei derart von den Bohrungen 24, 24' der Scharspitze 10 und den Bohrungen des Scharstiels 36 aufgenommen, dass diese jeweils rückseitig ein freiliegendes Ende 48, 48' ausbilden. Auf diese freiliegenden Enden 48, 48' ist jeweils zur zusätzlichen Fixierung eine Mutter 50, 50' vorgesehen bzw. montiert.

Um die freiliegenden Enden 48, 48' der Schrauben 30, 30' sowie die jeweils darauf aufgesetzten Muttern 50, 50' vor Verschleiß zu schützen, umfasst die Scharspitze 10 rückseitig ein aus der Rückseite 16 herausragendes Abschirmelement 32.

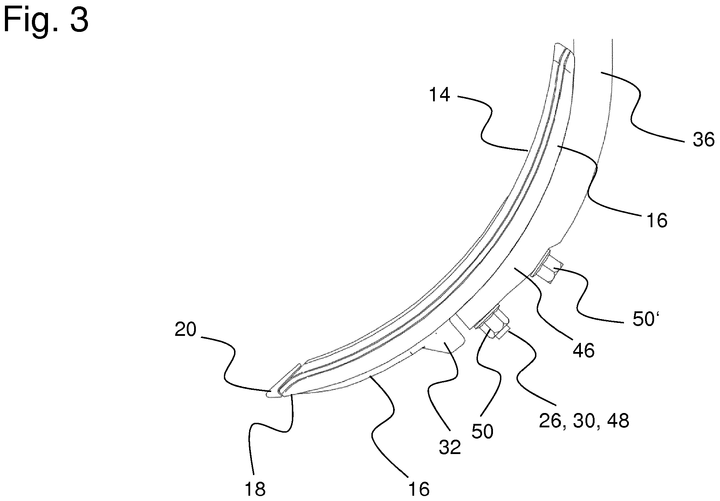

Die Lage und Anordnung des Abschirmelements 32 geht insbesondere aus der in Fig. 3 dargestellten Detailansicht hervor. Das Abschirmelement 32 ist insbesondere derart auf der Rückseite 16 der Scharspitze 10 angeordnet, dass dieses in Längserstreckungsrichtung der Scharspitze 10 ausgehend von der Schneidkante 18 zumindest näherungsweise vor dem Befestigungsbereich 22 und/oder nahe am Befestigungsbereich 22 liegt. Insbesondere ist das Abschirmelement 32 in Längserstreckungsrichtung der Scharspitze 10 ausgehend von der Schneidkante 18 unmittelbar unterhalb der Bohrung 24 angeordnet.

Das Abschirmelement 32 ist in Längserstreckungsrichtung der Scharspitze 10 ausgehend von der Schneidkante 18 in Richtung zum Befestigungsbereich 22, insbesondere in Richtung zur Bohrung 24, konisch aufweitend ausgebildet, d.h. die Breite des Abschirmelements 32 nimmt in Längserstreckungsrichtung der Scharspitze 10 ausgehend von der Schneidkante 18 in Richtung zum Befestigungsbereich 22 zu. Vorzugsweise ist ein Winkel der konischen Aufweitung des Absperrelements 32 vorzugsweise zumindest näherungsweise gleich zum Freiwinkel, welcher an der Schneidkante 18 der Scharspitze 10 vorliegt.

Die maximale Breite des Abschirmelements 32 entspricht dabei zumindest näherungsweise der Breite der Scharspitze 10. Die maximale Breite des Abschirmelements 32 ist jeweils so gewählt, dass das Abschirmelement 32 zumindest näherungsweise gleich breit wie der Scharstiel 36 ist bzw. zumindest so breit ist, wie die Schrauben 30, 30' und die Muttern 50, 50'.

Wahlweise kann das Abschirmelement 32 mit hier nicht dargestellten Hartmetallelementen und/oder mit einem hier nicht dargestellten abriebfesten Auftrag bestückt und/oder versehen sein. Bei dem zumindest einen abriebfesten Auftrag kann es sich beispielsweise um Zink-Nickel, chemisch Nickel, Chrom bzw. Chromschichtsysteme, Hartsilber, Kombinationsschichten oder anodische Schichten wie beispielsweise Eloxal, oder dergleichen handeln.

Ergänzend sei darauf hingewiesen, dass es sich bei der hier beschriebenen erfindungsgemäßen Scharspitze 10 wahlweise auch um einen Teil eines sog. Gänsefußschars (hier nicht gezeigt) handeln kann, bei dem der Grundkörper bauartbedingt pfeil- oder dreieckförmig ausgebildet ist und daher zwei Flügel aufweist, so dass die Scharspitze, wie sie hier beschrieben ist, zwei im Winkel zueinander angeordnete Abschnitte aufweist. Insofern weist ein solches Gänsefußschar streng genommen keinen quaderförmigen oder leicht gekrümmten Grundkörper 12 mit rechteckförmigem Grundriss auf, sondern eine pfeilförmige oder dreieckförmige Gestalt. Jedoch lassen sich die erfindungsgemäßen Merkmale und Grundprinzipien ebenso auf Gänsefußschare übertragen, bei denen in gleicher Weise ein Abschirmelement 32, wie es hier beschrieben wurde, sinnvoll zur Anwendung kommen kann. Somit kann die erfindungsgemäße Scharspitze 10 auch Teil eines Gänsefußschars sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 10: Scharspitze
- 12: Grundkörper
- 14: Vorderseite
- 16: Rückseite
- 18: Schneidkante
- 20: Schneidelement
- 22: Befestigungsbereich der Scharspitze
- 24: Bohrung
- 24': Bohrung
- 26: Befestigungsmittel
- 26': Befestigungsmittel
- 28: Freies Ende des Scharstiels
- 30: Schraube
- 30': Schraube
- 32: Abschirmelement
- 34: Scharsystem
- 36: Scharstiel
- 38: Federzinken
- 40: Befestigungseinheit
- 42: Federwindungen
- 44: Einspannabschnitt
- 46: Befestigungsbereich des Scharstiels
- 48: Freiliegendes Ende des Befestigungsmittel
- 48': Freiliegendes Ende des Befestigungsmittel
- 50: Mutter
- 50': Mutter

## Patentansprüche

1. Scharspitze (10) zur Verwendung in einem Scharsystem (34) zur Bodenbearbeitung, zumindest umfassend
- eine Vorderseite (14) und eine Rückseite (16),
- eine Schneidkante (18), vorzugsweise an einem freien Ende und/oder an einer Schmalseite der Scharspitze (10) und
- einen Befestigungsbereich (22) zur Befestigung der Scharspitze (10) an einem Scharstiel (36), welcher Befestigungsbereich (22) wenigstes eine Bohrung (24) umfasst, durch welche Bohrung (24) wenigstens ein Befestigungsmittel (26) hindurchführbar ist, oder welcher Befestigungsbereich (22) wenigstens einen Zapfen umfasst,
- wobei die Scharspitze (10) durch den wenigstens einen Zapfen des Befestigungsbereiches (22) oder durch die wenigstens eine Bohrung (24) des Befestigungsbereiches (22) am Scharstiel (36) festsetzbar ist,
**dadurch gekennzeichnet, dass** auf der Rückseite der Scharspitze (10) oberhalb der Schneidkante (18) zumindest ein aus der Rückseite (16) der Scharspitze (10) herausragendes Abschirmelement (32) vorgesehen oder angeordnet ist, welches wenigstens eine Abschirmelement (32) in Längserstreckungsrichtung der Scharspitze (10) ausgehend von der Schneidkante (18) unmittelbar unterhalb der wenigstens einen Bohrung (24) und/oder unmittelbar benachbart zum Zapfen des Befestigungsbereiches (22) vorgesehen ist.

2. Scharspitze nach Anspruch 1, bei welcher das Abschirmelement (32) auf der Rückseite der Scharspitze (10) zwischen der Schneidkante (18) und dem Befestigungsbereich (22), insbesondere in Längserstreckungsrichtung der Scharspitze (10) ausgehend von der Schneidkante (18) zumindest näherungsweise vor dem Befestigungsbereich (22) und/oder nahe am Befestigungsbereich (22) vorgesehen oder angeordnet ist.

3. Scharspitze nach Anspruch 1 oder 2, bei welcher das zumindest eine Abschirmelement (32) den Befestigungsbereich (22), insbesondere das wenigstens eine Befestigungsmittel (26) und/oder den wenigstens einen Zapfen, zumindest abschnittsweise überragt und/oder überdeckt.

4. Scharspitze nach einem der vorherigen Ansprüche, bei welcher das zumindest eine Abschirmelement (32) eine Breite aufweist oder umfasst, welche zumindest näherungsweise der Breite der Scharspitze (10) oder der Breite des Scharstiels (36) oder der Breite des wenigstens einen Befestigungsmittels (26) entspricht.

5. Scharspitze nach einem der vorherigen Ansprüche, bei welcher das zumindest eine Abschirmelement (32) eine Höhe oder Erhöhung gegenüber der Rückseite (16) aufweist, welche annähernd der Stärke eines über die Rückseite (16) der Scharspitze (10) hinausragenden Abschnittes oder Kopfes des wenigstens einen Befestigungsmittels (26) entspricht.

6. Scharspitze nach einem der Ansprüche 5, bei welcher das zumindest eine Abschirmelement in Längserstreckungsrichtung der Scharspitze (10) ausgehend von der Schneidkante (18) in Richtung zum Befestigungsbereich (22) konisch aufweitend oder sich konisch verbreiternd ausgebildet ist.

7. Scharspitze nach Anspruch 6, bei welcher ein Winkel der konischen Aufweitung oder Verbreiterung zumindest näherungsweise gleich ist zu einem Freiwinkel, welcher an der Schneidkante (18) der Scharspitze (10) ausgebildet ist.

8. Scharspitze nach einem der vorherigen Ansprüche, bei welcher das zumindest eine Abschirmelement (32) in Längserstreckungsrichtung der Scharspitze (10) ausgehend von der Schneidkante (18) in Richtung zum Befestigungsbereich (22) eine V-förmige oder eine U-förmige Kontur aufweist.

9. Scharspitze nach einem der vorherigen Ansprüche, bei welcher das zumindest eine Abschirmelement (32) als Vollmaterial ausgebildet und/oder einstückig mit der Scharspitze ausgebildet ist.

10. Scharspitze nach einem der Ansprüche 1 bis 8, bei welcher die Scharspitze (10) mit dem zumindest einen Abschirmelement (32) mehrteilig ausgebildet ist.

11. Scharspitze nach einem der vorherigen Ansprüche, bei welcher das zumindest eine Abschirmelement (32) mit wenigstens einem Hartmetallelement bestückt ist und/oder zumindest einen abriebfesten Auftrag umfasst.

12. Scharspitze nach einem der vorherigen Ansprüche, bei welcher das zumindest eine Abschirmelement (32) wenigstens eine Aussparung umfasst.

13. Scharsystem (34) zur landwirtschaftlichen Bodenbearbeitung, das wenigstens einen Scharstiel (36) und eine lösbar am Scharstiel (36) montierte Scharspitze (10) umfasst, wobei die Scharspitze (10)
- eine Vorderseite (14) und eine Rückseite (16),
- eine Schneidkante (18), vorzugsweise an einem freien Ende der Scharspitze (10),
- sowie einen Befestigungsbereich (22) zur Befestigung der Scharspitze (10) am Scharstiel (36) umfasst, welcher Befestigungsbereich (22) wenigstes eine Bohrung (24) umfasst, durch welche Bohrung (24) wenigstens ein Befestigungsmittel (26) hindurchführbar ist, oder welcher Befestigungsbereich (22) wenigstens einen Zapfen umfasst,
- wobei die Scharspitze (10) durch den wenigstens einen Zapfen des Befestigungsbereiches (22) oder durch die wenigstens eine Bohrung (24) des Befestigungsbereiches (22) am Scharstiel (36) festsetzbar ist,
**dadurch gekennzeichnet, dass** auf der Rückseite (16) der Scharspitze (10) oberhalb der Schneidkante (18) zumindest ein auf der Rückseite (16) der Scharspitze (10) herausragendes Abschirmelement (32) vorgesehen ist, welches wenigstens eine Abschirmelement (32) in Längserstreckungsrichtung der Scharspitze (10) ausgehend von der Schneidkante (18) unmittelbar unterhalb der wenigstens einen Bohrung (24) und/oder unmittelbar benachbart zum Zapfen des Befestigungsbereiches (22) vorgesehen ist.

14. Scharsystem (34) nach Anspruch 13, bei welcher das zumindest eine Abschirmelement (32) den Befestigungsbereich (22) zumindest abschnittsweise überragt und/oder überdeckt.

## Claims

1. A share tip (10) to be used in a share system (34) for soil tillage, the share tip (10) comprising at least
- a front side (14) and a back side (16),
- a cutting edge (18), preferably at a free end and/or at a narrow side of the share tip (10), and
- a fastening portion (22) for the fastening of the share tip (10) to a share handle (36), which fastening portion (22) comprises at least one bore (24), through which bore (24) at least one fastening implement (26) is passable, or which fastening portion (22) comprises at least one pin,
- wherein the share tip (10) is fixable to the share handle (36) by the at least one pin of the fastening portion (22) or by the at least one bore (24) of the fastening portion (22),
**characterised in that** at least one shielding element (32) projecting from the back side (16) of the share tip (10) is provided or arranged on the back side (16) of the share tip (10) above the cutting edge (18), which at least one shielding element (32) is provided coming from the cutting edge (18) in longitudinal extension direction of the share tip (10) immediately below the at least one bore (24) and/or immediately adjacent to the pin of the fastening portion (22).

2. The share tip according to claim 1, in which the shielding element (32) is provided or arranged on the back side of the share tip (10) between the cutting edge (18) and the fastening portion (22), in particular, coming from the cutting edge (18) in longitudinal extension direction of the share tip (10) at least approximately before the fastening portion (22) and/or near to the fastening portion (22).

3. The share tip according to claim 1 or 2, in which the at least one shielding element (32) at least in some sections projects beyond and/or covers the fastening portion (22), in particular, the at least one fastening implement (26) and/or the at least one pin.

4. The share tip according to one of the previous claims, in which the at least one shielding element (32) has or comprises a width corresponding at least approximately to the width of the share tip (10) or to the width of the share handle (36) or to the width of the at least one fastening implement (26).

5. The share tip according to one of the previous claims, in which the at least one shielding element (32) has a height or an elevation in relation to the back side (16) corresponding approximately to the thickness (16) of a section or of a head of the at least one fastening implement (26) projecting beyond the back side (16) of the share tip (10).

6. The share tip according to claim 5, in which the at least one shielding element is designed to conically flare or conically widen coming from the cutting edge (18) in longitudinal extension direction of the share tip (10) toward the fastening portion (22).

7. The share tip according to claim 6, in which an angle of the conical flaring or widening is at least approximately equal to a clearance angle formed at the cutting edge (18) of the share tip (10).

8. The share tip according to one of the previous claims, in which the at least one shielding element (32) has a V-shaped or a U-shaped contour coming from the cutting edge (18) in longitudinal extension direction of the share tip (10) toward the fastening portion (22).

9. The share tip according to one of the previous claims, in which the at least one shielding element (32) is designed as a solid material and/or is designed in one piece with the share tip.

10. The share tip according to one of the claims 1 to 8, in which the share tip (10) is designed with the at least one shielding element (32) in a multi-part design.

11. The share tip according to one of the previous claims, in which the at least one shielding element (32) is equipped with at least one hard metal element and/or comprises at least one abrasion-resistant application.

12. The share tip according to one of the previous claims, in which the at least one shielding element (32) comprises at least one recess.

13. A share system (34) for soil tillage, which comprises at least one share handle (36) and a share tip (10) detachably mounted to the share handle (36), wherein the share tip (10) comprises
- a front side (14) and a back side (16),
- a cutting edge (18), preferably at a free end of the share tip (10),
- as well as a fastening portion (22) for the fastening of the share tip (10) to a share handle (36), which fastening portion (22) comprises at least one bore (24), through which bore (24) at least one fastening implement (26) is passable, or which fastening portion (22) comprises at least one pin,
- wherein the share tip (10) is fixable to the share handle (36) by the at least one pin of the fastening portion (22) or by the at least one bore (24) of the fastening portion (22),
**characterised in that** at least one shielding element (32) projecting from the back side (16) of the share tip (10) is provided on the back side (16) of the share tip (10) above the cutting edge (18), which at least one shielding element (32) is provided coming from the cutting edge (18) in longitudinal extension direction of the share tip (10) immediately below the at least one bore (24) and/or immediately adjacent to the pin of the fastening portion (22).

14. The share system (34) according to claim 13, in which the at least one shielding element (32) at least in some sections projects beyond and/or covers the fastening portion (22).

## Revendications

1. Pointe de soc (10) destinée à être utilisée dans un système de soc (34) destiné au travail du sol, comprenant au moins
- une face avant (14) et une face arrière (16),
- un bord tranchant (18), de préférence à une extrémité libre et/ou sur un côté étroit de ladite pointe de soc (10) et
- une zone de fixation (22) destinée à fixer ladite pointe de soc (10) à un manche de soc (36), laquelle zone de fixation (22) comprend au moins un perçage (24) au travers duquel perçage (24) au moins un moyen de fixation (26) peut être conduit, ou laquelle zone de fixation (22) comprend au moins un tenon,
- ladite pointe de soc (10) pouvant être fixée au manche du soc (36) par ledit au moins un tenon de la zone de fixation (22) ou par ledit au moins un perçage (24) de la zone de fixation (22),
**caractérisée en ce qu'**au moins un élément de blindage (32) dépassant de la face arrière (16) de la pointe de soc (10) est prévu ou agencé sur la face arrière de la pointe de soc (10), au-dessus du bord tranchant (18), lequel au moins un élément de blindage (32) est prévu dans le sens d'étirement longitudinal de la pointe de soc (10) à partir du bord tranchant (18), directement en dessous dudit au moins un perçage (24) et/ou directement à côté du tenon de la zone de fixation (22).

2. Pointe de soc selon la revendication 1, dans laquelle l'élément de blindage (32) est prévu ou agencé sur la face arrière de la pointe de soc (10) entre le bord tranchant (18) et la zone de fixation (22), notamment dans le sens d'étirement longitudinal de la pointe de soc (10) à partir du bord tranchant (18), au moins approximativement avant la zone de fixation (22) et/ou proche de ladite zone de fixation (22).

3. Pointe de soc selon la revendication 1 ou 2, dans laquelle ledit au moins un élément de blindage (32) dépasse et/ou recouvre au moins partiellement la zone de fixation (22), notamment ledit au moins un moyen de fixation (26) et/ou ledit au moins un tenon.

4. Pointe de soc selon l'une quelconque des revendications précédentes, dans laquelle ledit au moins un élément de blindage (32) présente ou comprend une largeur qui correspond au moins approximativement à la largeur de la pointe de soc (10) ou à la largeur du manche de soc (36) ou à la largeur dudit au moins un moyen de fixation (26).

5. Pointe de soc selon l'une quelconque des revendications précédentes, dans laquelle ledit au moins un élément de blindage (32) présente une hauteur ou élévation, par rapport à la face arrière (16), qui correspond approximativement à l'épaisseur d'un tronçon ou tête dudit au moins un moyen de fixation (26) en saillie par rapport à la face arrière (16) de la pointe de soc (10).

6. Pointe de soc selon la revendication 5, dans laquelle ledit au moins un élément de blindage est réalisé s'élargissant de manière conique ou se répartissant de manière conique dans le sens d'étirement longitudinal de la pointe de soc (10) à partir du bord tranchant (18) vers la zone de fixation (22).

7. Pointe de soc selon la revendication 6, dans lequel un angle de l'élargissement ou répartition conique est au moins approximativement égal à un angle libre qui est formé sur le bord tranchant (18) de la pointe de soc (10).

8. Pointe de soc selon l'une quelconque des revendications précédentes, dans laquelle ledit au moins un élément de blindage (32) présente un contour en V ou en U, dans le sens d'étirement longitudinal de la pointe de soc (10) à partir du bord tranchant (18) vers la zone de fixation (22).

9. Pointe de soc selon l'une quelconque des revendications précédentes, dans laquelle ledit au moins un élément de blindage (32) est réalisé en tant que matériau plein et/ou d'un seul tenant avec la pointe de soc.

10. Pointe de soc selon l'une quelconque des revendications 1 à 8, dans laquelle la pointe de soc (10) est réalisée en plusieurs parties avec ledit au moins un élément de blindage (32).

11. Pointe de soc selon l'une quelconque des revendications précédentes, dans laquelle ledit au moins un élément de blindage (32) est équipé d'au moins un élément en métal dur et/ou comprend au moins une couche résistant à l'abrasion.

12. Pointe de soc selon l'une quelconque des revendications précédentes, dans laquelle ledit au moins un élément de blindage (32) comprend au moins un évidement.

13. Système de soc (34) destiné au travail du sol agricole, qui comprend au moins un manche de soc (36) et une pointe de soc (10) montée de manière détachable au manche du soc (36), ladite pointe de soc (10) comprenant
- une face avant (14) et une face arrière (16),
- un bord tranchant (18), de préférence à une extrémité libre de la pointe de soc (10),
- ainsi qu'une zone de fixation (22) destinée à fixer ladite pointe de soc (10) au manche de soc (36), laquelle zone de fixation (22) comprend au moins un perçage (24) au travers duquel perçage (24) au moins un moyen de fixation (26) peut être conduit, ou laquelle zone de fixation (22) comprend au moins un tenon,
- ladite pointe de soc (10) pouvant être fixée au manche du soc (36) par ledit au moins un tenon de la zone de fixation (22) ou par ledit au moins un perçage (24) de la zone de fixation (22),
**caractérisée en ce qu'**au moins un élément de blindage (32) en saillie sur la face arrière (16) de la pointe de soc (10) est prévu sur la face arrière (16) de la pointe de soc (10), au-dessus du bord tranchant (18), lequel au moins un élément de blindage (32) est prévu dans le sens d'étirement longitudinal de la pointe de soc (10) à partir du bord tranchant (18), directement en dessous dudit au moins un perçage (24) et/ou directement dans le voisinage du tenon de la zone de fixation (22).

14. Système de soc (34) selon la revendication 13, dans laquelle ledit au moins un élément de blindage (32) dépasse de et/ou recouvre au moins partiellement la zone de fixation (22).
